# EUROPEAN PATENT SPECIFICATION

(11) **EP 3 711 914 B1**
(45) Date of publication and mention of the grant of the patent: **06.04.2022**
(21) Application number: 18878934.1
(22) Date of filing: 10.08.2018
(51) Int. Cl.: B27N 7/00, B27N 3/02, B27K 5/00, B27M 3/00, B32B 21/00, C08L 97/02, B27N 1/00

(54) **METHOD FOR MANUFACTURING WOOD COMPOSITE BOARD**
VERFAHREN ZUR HERSTELLUNG EINER HOLZVERBUNDPLATTE
PROCÉDÉ DE FABRICATION D'UNE PLANCHE COMPOSITE EN BOIS

(30) Priority: 14.11.2017 JP 2017219226
(43) Date of publication of application: 23.09.2020
(73) Proprietor: Panasonic Intellectual Property Management Co., Ltd., Osaka-shi, Osaka 540-6207 (JP)
(72) Inventor: MAEDA, Naohiko, Osaka-shi, Osaka 540-6207 (JP); NAITO, Shigeki, Osaka-shi, Osaka 540-6207 (JP); ASADA, Teppei, Osaka-shi, Osaka 540-6207 (JP); FUJIMOTO, Ayano, Osaka-shi, Osaka 540-6207 (JP)
(74) Representative: Müller-Boré & Partner Patentanwälte PartG mbB
(86) International application number: PCT/JP2018/030013
(87) International publication number: WO 2019/097780

(56) References cited:
- EP-A1- 2 692 810
- WO-A1-2017/022236
- WO-A1-2017/169321
- JP-A- S 609 737
- JP-A- S 609 737
- JP-A- 2004 188 831
- JP-A- 2014 113 784
- JP-A- 2017 140 778

## Description

### Technical Field

The present disclosure generally relates to methods for manufacturing wood composite boards, and specifically, to a method for manufacturing a wood composite board containing a pulverized palm tree material.

### Background Art

Patent Literature 1 discloses a method for manufacturing a bed plate for a floor. This method includes applying an isocyanate-based adhesive to wood powder, dispersing the wood powder onto a composite board surface, and performing thermocompression to form a molded layer.

The isocyanate-based adhesive is, however, a petroleum-derived adhesive. Thus, the bed plate manufactured by using the isocyanate-based adhesive may be a source from which volatile organic compounds (VOCs) are generated.

High-quality woods are recently difficult to obtain and are too costly to use readily. Thus, it becomes necessary to manufacture composite boards from reasonable woods even with low quality. However, low-quality woods have defects in appearance, such as holes where knots have fallen out, unevenness due to wood grain, and the like. Therefore, even when the low-quality woods are processed into a composite board, the defects in appearance as mentioned above may remain.

WO2017169321A1 discloses an aqueous bonding composition comprising: (A) a saccharide; (B) a water-soluble synthetic resin; and (C) an inorganic acid ammonium salt, wherein the inorganic acid ammonium salt (C) comprises at least one salt selected from ammonium dihydrogen phosphate and ammonium chloride.

### Citation List

### Patent Literature

Patent Literature 1: JP 2008-179065 A

### Summary of Invention

It is an object of the present disclosure to provide a method for manufacturing a wood composite board, wherein a wood composite board excellent in appearance is manufacturable with this method, while consideration is given to the environment.

A method for manufacturing a wood composite board according to one aspect of the present disclosure includes supplying a biomass composition containing a pulverized palm tree material and a multivalent carboxylic acid to a surface of a wood board, and then performing thermocompression molding on the biomass composition supplied to the surface of the wood board.

The invention is defined in claim 1.

### Brief Description of Drawings

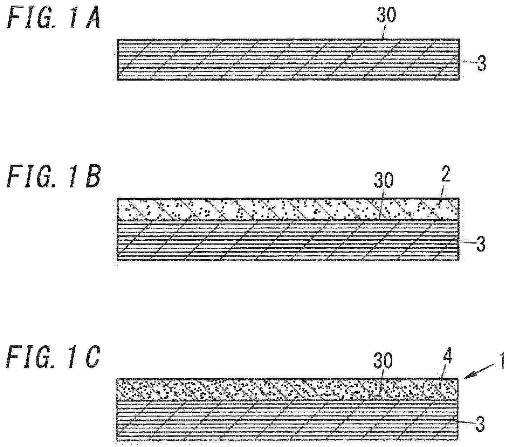

FIGS. 1A to 1C are schematic sectional views each illustrating a step in a method for manufacturing a wood composite board according to one embodiment of the present disclosure.

### Description of Embodiments

### (1) Schema

A method for manufacturing a wood composite board according to the present embodiment includes supplying a biomass composition containing a pulverized palm tree material and a multivalent carboxylic acid to a surface of a wood board, and then performing thermocompression molding on the biomass composition supplied to the surface of the wood board. With the biomass composition, a wood composite board excellent in appearance is manufacturable while consideration is given to the environment.

### (2) Details

### (2.1) Biomass Composition

A biomass composition includes a pulverized palm tree material and a multivalent carboxylic acid. The biomass composition is usable as an adhesive and is also usable as a molding material. That is, the biomass composition can, as an adhesive, bond a plurality of members to each other. The biomass composition can, as a molding material, form a plate by itself or form a surface layer on a surface of another member.

Essential components contained in the biomass composition will be specifically described below.

First of all, palms will be described. Palms are not particularly limited, but oil palms and coconut palms are particularly preferable. Meanwhile, in Southeast Asia, a palm oil industry is active, but palm trees become less fruitful in 20 to 30 years. Therefore, disposal of such old palm trees has become a problem. This is because burning old wood is prohibited in order to prevent greenhouse gas emissions, and in addition, recycling palm trees as timber is difficult due to a high water content of the palm trees. For these reasons, felled old palm trees and the like are beneficially usable as raw materials for the biomass composition.

Next, the pulverized palm tree material will be described. The pulverized palm tree material is obtainable in the following way. First, trunks of palms are ground and squeezed to divide them into a residue and juice. The residue is then dried to obtain a primary ground product. The residue is dried in order to evaporate water in the residue. After the primary ground product is obtained, the primary ground product may further be ground to obtain a secondary ground product as necessary. Particles forming the secondary ground product are averagely smaller than those forming the primary ground product. The primary ground product or the secondary ground product is then sieved. The nominal opening of a sieve used herein is, for example, larger than or equal to 250 µm and smaller than or equal to 850 µm in accordance with JIS Z8801-1. The primary ground product or the secondary ground product is then divided into a first residue that has passed through the sieve and a second residue that has not passed through the sieve. When the first residue and the second residue are compared with each other, the first residue contains more parenchyma cells. Here, the parenchyma cells are cells which are included in parenchyma tissue of the palm as a plant body and which perform critical physiological activities such as anabolism, depot, decomposition, and secretion, and the parenchyma cells contain a saccharide. The parenchyma tissue including the parenchyma cells is found in the epidermis, pith, mesophyll, and pulp of the palm as the plant body. The first residue contains more parenchymatous cells, and thus, a larger amount of the saccharide, than the second residue. Therefore, the first residue is preferably used as the pulverized palm tree material from which the biomass composition is to be manufactured, because the first residue contains the parenchymatous cells as main components. Alternatively, the primary ground product or the secondary ground product does not have to be sieved but may be used as is as the pulverized palm tree material from which the biomass composition is to be manufactured. Note that since the juice contains a water-soluble saccharide dissolved therein, the juice is usable to synthesize an intermediate product which will be described later. The second residue contains more vascular bundles than the first residue.

The saccharide contained in the pulverized palm tree material includes monosaccharides, disaccharides, and polysaccharides (including oligosaccharides). The disaccharide and the polysaccharide are each configured by glycoside linkage of a plurality of monosaccharides. Examples of the monosaccharide include fructose, ribose, arabinose, rhamnose, xylulose, and deoxyribose. Examples of the disaccharide include sucrose, maltose, trehalose, Turanose, lactulose, Maltulose, Palatinose, gentiobiulose, melibiulose, galactosucrose, lutinulose, and Planteobiose. Examples of the polysaccharide include starch, agarose, alginic acid, glucomannan, inulin, chitin, chitosan, hyaluronic acid, glycogen, and cellulose. Examples of the oligosaccharide include fructo-oligosaccharide, galacto-oligosaccharide, mannan oligosaccharide, and stachyose. The pulverized palm tree material may contain only one kind of saccharide, or two or more kinds of saccharides.

Next, the multivalent carboxylic acid will be described. The multivalent carboxylic acid is not particularly limited as long as it is a compound including a plurality of carboxy groups. Examples of the multivalent carboxylic acid include citric acid, tartaric acid, malic acid, gluconic acid, sebacic acid, itaconic acid, succinic acid, oxalic acid, adipic acid, malonic acid, phthalic acid, maleic acid, fumaric acid, glutaric acid (1,5-pentanedioic acid), glutaconic, acid and pentenedioic acid. As the multivalent carboxylic acid, an acid anhydride may also be used.

Of the multivalent carboxylic acids listed above, citric acid, tartaric acid, malic acid, gluconic acid, sebacic acid, and itaconic acid are particularly preferred because they are produced from plants as raw materials. When plants are adopted as raw materials as in this case, the use of fossil resources is suppressed, and therefore, the biomass composition is obtainable without imposing a burden on the environment. The biomass composition may contain only one type of multivalent carboxylic acid or two or more types of multivalent carboxylic acids. Note that the multivalent carboxylic acid is synonymous with a polycarboxylic acid.

In particular, adopting parenchyma cells of a palm enables the amount of use of the multivalent carboxylic acid, which functions as a catalyst, to be limited a small amount. Specifically, the content of the multivalent carboxylic acid may be greater than or equal to 0.3 wt. % and less than or equal to 5 wt. % with respect to the total amount of the biomass composition. Therefore, it is possible: to suppress an acid-induced reduction in strength of the cured material of the biomass composition; and/or to suppress environmental degradation caused by elution of acid.

Basically, the biomass composition is obtainable by blending the pulverized palm tree material containing the above-described saccharide with the multivalent carboxylic acid. Both the pulverized palm tree material and the multivalent carboxylic acid are, in general, readily available. This, therefore, enables the biomass composition to be produced with low cost.

When the biomass composition is heat-treated, the biomass composition cures completely through two-step reaction. That is, first-step reaction (hereinafter sometimes referred to as "preliminary reaction") proceeds due to heat treatment and is completed, and second-step reaction proceeds due to further heat treatment and is completed. The biomass composition becomes a cured material upon completion of the two-step reaction. In the first-step reaction and the second-step reaction, the temperature of the biomass composition increases. However, between the first-step reaction and the second-step reaction, the temperature of the biomass composition does not increase but is maintained for a definite time period. The biomass composition between the first-step reaction and the second-step reaction is thermoplastic and water-soluble. As the state of the biomass composition approaches the second-step reaction, the biomass composition becomes thermosetting. The biomass composition as an adhesive or a molding material may be in a state prior to the preliminary reaction or in a state after the preliminary reaction and prior to the second-step reaction.

The biomass composition after the preliminary reaction will now be described. The heat treatment for the preliminary reaction hydrolyzes the saccharide contained in the pulverized palm tree material, thereby producing a hydrolysate product. In addition, the hydrolysate product dehydrates and condenses, thereby producing a reaction product of a sugar-modified substance.

For example, when the saccharide is sucrose, the biomass composition is presumed to cure in the following reaction. First, the sucrose hydrolyzes to generate glucose and fructose. Dehydration reaction of the fructose then generates furfural (specifically, 5-(hydroxymethyl)furfural). The furfural, which is the sugar-modified substance, is further heat-treated, thereby becoming a furan resin, which is a thermosetting resin, and the furan resin cures in the presence of the multivalent carboxylic acid. On the other hand, the glucose becomes a sugar ester polymer due to dehydration and condensation reaction and cures. Since the multivalent carboxylic acid is considered to function as a catalyst, the multivalent carboxylic acid undergoes no significant modification and remains as is.

Thus, in a state where the preliminary reaction by heat treatment is completed, the biomass composition contains the reaction product of the sugar-modified product. The biomass composition in this state is thermoplastic and water-soluble.

Optional components contained in the biomass composition will be specifically described below. In this case, the biomass composition may be in a state either before or after the preliminary reaction. The preliminary reaction may be caused after the optional components are contained in the biomass composition.

The biomass composition preferably further contains an intermediate product of the juice of the palm and the multivalent carboxylic acid. Here, the intermediate product is a substance in an intermediate step of curing reaction. The intermediate product is similar to, as it were, a biomass composition after the preliminary reaction. Thus, the intermediate product is also usable as an adhesive. Synthesis of the intermediate product is possible by adding the multivalent carboxylic acid to the juice of the palm and causing preliminary reaction by the heat treatment. The additive amount of multivalent carboxylic acid in this case is, for example, greater than or equal to 5 parts by pass and less than or equal to 100 parts by mass with respect to 100 parts by mass of saccharide contained in the juice of the palm. As the juice of the palm, juice obtained by grinding and squeezing the palm as described above may be used. Specific examples of the multivalent carboxylic acid are similar to those described above. The heat treatment for the preliminary reaction evaporates water or the like in the intermediate product, so that the intermediate product becomes a solid. The solid may directly be blended with the biomass composition but is preferably pulverized into powder, or the powder thus obtained is dissolved in a solvent such as water to provide an aqueous solution. This facilitates uniform blending of the intermediate product with the biomass composition. The biomass composition further containing the intermediate product enables excellent strength to be imparted to a surface layer of the wood composite board. Note that since the intermediate product has a function as an adhesive, the intermediate product is not only used as an optional component in the biomass composition but also usable independently.

The biomass composition preferably further contains at least one of ammonium sulfate or ammonium chloride. When the biomass composition is heat-treated, the ammonium sulfate and the ammonium chloride function, similarly to the multivalent carboxylic acid, as catalysts for the curing reaction of saccharides. This enables excellent water resistance to be imparted to the surface layer of the wood composite board.

In general, the esterification reaction of hydroxy groups in the pulverized palm tree material with a multivalent carboxylic acid proceeds relatively slowly over time. Therefore, blending at least one of ammonium sulfate or ammonium chloride as the catalyst with the biomass composition enables a reaction time of the esterification to be reduced.

The content of at least one of ammonium sulfate or ammonium chloride (when both ammonium sulfate or ammonium chloride are contained, the total content thereof) is preferably greater than or equal to 0.3 wt. % and less than or equal to 5 wt. % with respect to the total weight of the biomass composition. This enables the reaction time of the esterification to further be reduced. Moreover, it is possible to further improve the water resistance of the surface layer of the wood composite board. Since ammonium sulfate and ammonium chloride are relatively less acidic salts, the strength of the surface layer of the wood composite board is maintained.

The biomass composition is preferably substantially free from organic solvents, formaldehyde, and tertiary amine. The tertiary amine may decompose, thereby generating formaldehyde. These substances are volatile organic compounds (VOCs) or sources from which the volatile organic compounds are generated. Therefore, the biomass composition substantially free from the above-mentioned substances can be environmentally friendly. Note that saying "substantially free from the above-mentioned substances" means that an extremely small amount of the above-mentioned substances may be contained as impurities or the like as long as they do not adversely affect the environment.

### (2.2) Method for Manufacturing Wood Composite Board

FIGS. 1A to 1C show an example of a method for manufacturing a wood composite board according to the present embodiment.

First of all, as illustrated in FIG. 1A, a wood board 3 is prepared. The wood board 3 is not particularly limited but is preferably a composite board or a particleboard. Specific examples of raw wood which is to be a material for the composite board and the particleboard include coniferous wood such as pine, cedar, and cypress, and broadleaf wood such as rawan, capole, and poplar. Surfaces of the composite board and the particleboard may have defects in appearance. Example types of the defects in appearance include holes where knots have fallen out and unevenness due to wood grain in the case of the composite board, and a gap between pieces (particles) of wood and the like in the case of the particleboard. Even when the wood board 3 has a surface with such defects in appearance, forming a surface layer of the biomass composition on the surface enables a wood composite board with a satisfactory appearance to be provided.

Next, as illustrated in FIG. 1B, a biomass composition 2 is supplied to the surface of the wood board 3 to have a thickness within an approximate range of 1 mm to 5 mm both inclusive after thermocompression molding. The biomass composition 2 is basically supplied to a site to be decorated on the wood board 3 but may be supplied to other sites than the site to be decorated.

As illustrated in FIG. 1C, the thermocompression molding is performed after the biomass composition 2 is supplied. Molding conditions for the thermocompression molding are not particularly limited. The molding temperature is, for example, higher than or equal to 140°C and lower than or equal to 230°C. The molding time is, for example, longer than or equal to 30 seconds and shorter than or equal to 3 minutes. The molding pressure is, for example, higher than or equal to 0.5 MPa and lower than or equal to 4 MPa. By performing the thermocompression molding described above, a surface layer 4 is formed on a surface 30 of the wood board 3. The surface layer 4 is a cured material of the biomass composition 2. The surface layer 4 is substantially free from a petroleum-derived adhesive. Moreover, even when the surface of the wood board 3 used has defects such as recesses and projections and the like in appearance, the recesses can be, for example, filled with the biomass composition 2 to cover the defects in appearance on the surface of the wood board 3 with the surface layer 4. The surface layer 4 has a flat and smooth surface due to the thermocompression molding and is thus excellent in appearance. Accordingly, the present embodiment enables a wood composite board 1 excellent in appearance is manufacturable while consideration is given to the environment. The wood composite board 1 thus obtained is widely applicable to, for example, architectural material, furniture, dwelling house interior decoration, and the like.

### (3) Summary

As described above, a method for manufacturing a wood composite board (1) according to a first aspect includes: supplying a biomass composition (2) containing a pulverized palm tree material and a multivalent carboxylic acid to a surface (30) of a wood board (3); and then performing thermocompression molding on the biomass composition (2) supplied to the surface (30) of the wood board (3).

This aspect enables a wood composite board (1) excellent in appearance to be manufactured while consideration is given to the environment.

In a method for manufacturing a wood composite board (1) of a second aspect referring to the first aspect, the biomass composition (2) further contains an intermediate product of juice of a palm and the multivalent carboxylic acid.

This aspect enables excellent strength to be imparted to a surface layer (4) of the wood composite board (1).

In a method for manufacturing a wood composite board (1) of a third aspect referring to the first or second aspect, the pulverized palm tree material contains parenchymatous cells.

This aspect enables the amount of use of the multivalent carboxylic acid, which functions as a catalyst, to be limited a small amount.

In a method for manufacturing a wood composite board (1) of a fourth aspect referring to any one of the first to third aspects, the biomass composition further contains at least one of ammonium sulfate or ammonium chloride.

This aspect enables excellent water-resistance to be imparted to the surface layer (4) of the wood composite board (1).

In a method for manufacturing a wood composite board (1) of a fifth aspect referring to any one of the first to fourth aspects, the wood board (3) is a composite board or a particleboard.

According to this aspect, even when there is a defect in appearance, forming the surface layer (4) of the biomass composition (2) enables a wood composite board (1) with a satisfactory appearance to be provided.

### Examples

The present disclosure will be specifically described with reference to examples, but the present disclosure is not limited to the following examples.

### (Examples 1 to 3)

First, trunks of palms (oil palms) were ground and squeezed to divide them into a residue and juice. Then, the residue was dried to obtain a primary ground product, and the primary ground product was further ground to obtain a secondary ground product. The secondary ground product was then sieved. The nominal opening of a sieve used is 500 µm in accordance with JIS Z8801-1. The secondary ground product was divided into a first residue that had passed through the sieve and a second residue that had not passed through the sieve. The first residue corresponds to palm ground products (parenchymatous cells of palm) to be used for manufacturing a biomass composition. The juice (solid content: about 10 wt. %) was used to produce a juice compound serving as an intermediate product. That is, first, 25 parts by mass of citric acid was added to 100 parts by mass of saccharide to obtain a mixture, which is then heated at 105°C to obtain a solid. This solid was then pulverized into powder, thereby obtaining the juice compound.

The biomass compositions of Examples 1 to 3 were prepared by blending components in amounts shown in Table 1. Then, the biomass composition was supplied to a surface of a wood board (a composite board made from domestic coniferous wood and having a thickness of 9 mm), and then, thermocompression molding is performed under molding conditions shown in Table 1, thereby manufacturing a wood composite board.

### (Comparative Example 1)

The composite board made from domestic coniferous wood and having a thickness of 12 mm was used as is.

### <Evaluation>

### [Moldability]

Moldability was evaluated by checking for separation between the wood board and the surface layer.

### [Exterior Appearance]

Exterior appearance was evaluated by visually checking for defects such as holes where knots have fallen out, unevenness due to wood grain, and the like.

### [Hygroscopic Thickness Swelling Rate]

To evaluate water resistance, a hygroscopic thickness swelling rate test was performed in accordance with JIS A 5908.

### [Peeling Strength]

To evaluate the strength, a peeling strength test was performed in accordance with JIS A 5908.

### [Falling-Weight Test]

To evaluate surface hardness, a test based on the DuPont method was performed in accordance with JIS K 5600-5-3. A 500-g weight having a round tip end was dropped from a height of 30 cm with its tip end downward onto a surface layer of a wood composite board of each of Examples 1 to 3. The tip end of the weight has a diameter of about 1.27 cm. In the case of Comparative Example 1, the weight was dropped as is onto the composite board.

**[Table 1]**

| | | | Ex. 1 | Ex. 2 | Ex. 3 | Comp. Ex. 1 |
|---|---|---|---|---|---|---|
| Wood Board (mm) | | Composite Board | 9 | 9 | 9 | 12 |
| Biomass Compos**.** (wt. %) | Palm Tree Pulverized Material | Parenchymatous Cell of Palm | 97 | 97 | 50 | - |
| | Intermediate Product | Juice Cpd. | 0 | 0 | 45 | - |
| | Multivalent Carboxylic Acid | Citric Acid | 3 | 2.7 | 4.5 | - |
| | Ammonium Sulfate | | 0 | 0.3 | 0.5 | - |
| Surface Layer | Thickness | mm | 3 | 3 | 3 | - |
| | Density | kg/m³ | 800 | 800 | 800 | - |
| Molding Condition | Temperature | °C | 220 | 220 | 220 | - |
| | Time | sec. | 60 | 30 | 30 | - |
| | Pressure | kg/cm² | 40 | 40 | 40 | - |
| Evaluation | Moldability (Presence/Absence of Separation) | - | Absent | Absent | Absent | - |
| | External Appearance (Presence/Absence of Defect) | | Absent | Absent | Absent | Present |
| | Hygroscopic Thickness Swelling Rate | % | 5.4 | 4.1 | 4.1 | 3.8 |
| | Peeling Strength | MPa | 0.4 | 0.4 | 1.0 | 1.0 |
| | Falling-Weight Test | mm | 0.3 | 0.3 | 0.2 | 0.5 |

As can be seen from Table 1, Examples 1 to 3 show better exterior appearances and better surface hardness than Comparative Example 1. Moreover, the hygroscopic thickness swelling rate of Examples 1 to 3 is lower than or equal to 10% which is negligible in practice and is equivalent to that of the Comparative Example 1.

### Reference Signs List

- 1: WOOD COMPOSITE BOARD
- 2: BIOMASS COMPOSITION
- 3: WOOD BOARD
- 30: SURFACE

## Claims

1. A method for manufacturing a wood composite board (1), comprising:
supplying a biomass composition (2) containing a pulverized palm tree material and a multivalent carboxylic acid to a surface of a wood board (3) to have a thickness within a range of 1 mm to 5 mm both inclusive after thermocompression molding;
then performing thermocompression molding on the biomass composition supplied to the surface (30) of the wood board, thereby forming a surface layer (4) of the biomass composition on the surface of the wood board

2. The method of claim 1, wherein
the biomass composition further contains an intermediate product of juice of a palm and a multivalent carboxylic acid.

3. The method of any one of claims 1 or 2, wherein
the biomass composition further contains at least one of ammonium sulfate or ammonium chloride.

4. The method of any one of claims 1 to 3, wherein
the wood board is a composite board or a particleboard.

## Patentansprüche

1. Verfahren zur Herstellung einer Holzverbundplatte (1), umfassend:
Das Zuführen einer Biomassezusammensetzung (2), die ein pulverisiertes Palmenmaterial und eine mehrwertige Carbonsäure enthält, auf eine Oberfläche einer Holzplatte (3), so dass sie nach dem Thermokompressionsformen eine Dicke in einem Bereich von 1 mm bis 5 mm, jeweils einschließlich, aufweist;
anschließendes Thermokompressionsformen der Biomassezusammensetzung, die der Oberfläche (30) der Holzplatte zugeführt wurde, wodurch eine Oberflächenschicht aus der Biomassezusammensetzung auf der Oberfläche der Holzplatte gebildet wird.

2. Verfahren nach Anspruch 1, wobei
die Biomassezusammensetzung weiter ein Zwischenprodukt aus dem Saft einer Palme und einer mehrwertigen Carbonsäure enthält.

3. Verfahren nach einem der Ansprüche 1 oder 2, wobei
die Biomassezusammensetzung weiter mindestens eines von Ammoniumsulfat oder Ammoniumchlorid enthält.

4. Verfahren nach einem der Ansprüche 1 bis 3, wobei
die Holzplatte eine Verbundplatte oder eine Spanplatte ist.

## Revendications

1. Procédé de fabrication d'un panneau composé de bois (1), comprenant :
fournir une composition de biomasse (2) contenant un matériau de palmier pulvérisé et un acide carboxylique multivalent à une surface d'un panneau de bois (3) pour avoir une épaisseur au sein d'une plage de 1 mm à 5 mm, les deux inclus, après moulage par thermocompression ;
puis réaliser un moulage par thermocompression sur la composition de biomasse fournie à la surface (30) du panneau de bois, formant de ce fait une couche superficielle (4) de la composition de biomasse sur la surface du panneau de bois.

2. Procédé selon la revendication 1, dans lequel
la composition de biomasse contient en outre un produit intermédiaire de jus d'un palmier et un acide carboxylique multivalent.

3. Procédé selon l'une quelconque des revendications 1 ou 2, dans lequel
la composition de biomasse contient en outre au moins un composé parmi le sulfate d'ammonium ou le chlorure d'ammonium.

4. Procédé selon l'une quelconque des revendications 1 à 3, dans lequel
le panneau de bois est un panneau composé ou un panneau de particules.
